# EUROPEAN PATENT SPECIFICATION

(11) **EP 0 425 725 B1**
(45) Date of publication and mention of the grant of the patent: **16.02.1994**
(21) Application number: 89120255.8
(22) Date of filing: 02.11.1989
(51) Int. Cl.: B01D 29/33

(54) **Plate structure for liquid filtration devices**
Scheibenelement für Flüssigkeitsfiltereinrichtungen
Structure de plateaux pour une installation pour filtrer des liquides

(43) Date of publication of application: 08.05.1991
(73) Proprietor: TMCI PADOVAN S.p.A., 31015 Conegliano (Treviso) (IT)
(72) Inventor: Meneghini, Renzo, I-31020 San Vendemiano Treviso (IT)
(74) Representative: Modiano, Guido, Dr.-Ing.

(56) References cited:
- DE-A- 1 436 304
- US-A- 3 203 549

## Description

The present invention relates to a plate structure for devices for filtering liquids such as for example beverage liquids.

Wines, beers and other beverage liquids are currently filtered by causing the liquid to flow through an absorbent material, such as fossil meal (diatomite), arranged above a bed composed of a drainage net and of one or more filtration fabrics applied on each plate of a column-type filter.

After the passage through the diatomite and the lower bed, the liquid is collected in the axial hollow of a collector which supports the column of plates.

The amount of diatomite arranged on each plate is increased as its filtration power decreases, until the column of plates is completely filled and the filter is therefore saturated.

Then the filtration device is to be washed. To this end, nozzles are provided, which spray water which is then centrifuged by rotating the column of plates.

US-A-3,203,549 discloses a liquid filtering apparatus comprising flat-sided filter elements in the form of disk-shaped hallow bodies, having sieve openings on at least one of its flat sides, containing a supporting body which consists of a wide-meshed wire netting, said filter elements being provided with a closing element allocated in slot-like openings extending along their periphery.

However, the plates, the drainage nets and the filtration fabrics are not perfectly cleaned, since the washing liquid encounters impassable obstacles to its outflow at the crossing of the meshes and in the regions of contact between said meshes and the upper surface of each plate.

The aim of the present invention is to eliminate the disadvantage described above in the prior art by providing a new plate structure for liquid filtration devices.

Within the scope of the above aim, an important object to provide a plate structure which also allows a better operation of the device during the filtration step.

Another object is to provide a plate structure which allows to reduce the elements of the filtration bed.

Not least object is to have low costs which can be obtained with conventional production systems.

This aim, these objects and others which will become apparent hereinafter are achieved by a plate structure for liquid filtration devices comprising a substantially horizontal disk-like plate having an axial hole, an upper supporting element supported by said plate and an annular containment element rigidly associated with said upper supporting element and resting with a lower elastic lip on the outer circumferential region of said plate, characterized in that said plate has, on its upper surface, a plurality of supporting protrusions, said protrusions having an upper planar surface forming a support for filtration elements of fabric, so as to form a liquid collection region below said filtration elements, said outer circumferential region of said disk-like plate having a depressed shape, some of the protrusions arranged adjacent to said circumferential region having holes in which threaded ends of spacer pins are screwed, said threaded ends protruding upward from said plate and screwing to said upper supporting element.

The characteristics and advantages of the invention will become apparent from the detailed description of an embodiment of the plate structure, illustrated only by way of non-limitative example in the accompaining drawings, wherein:

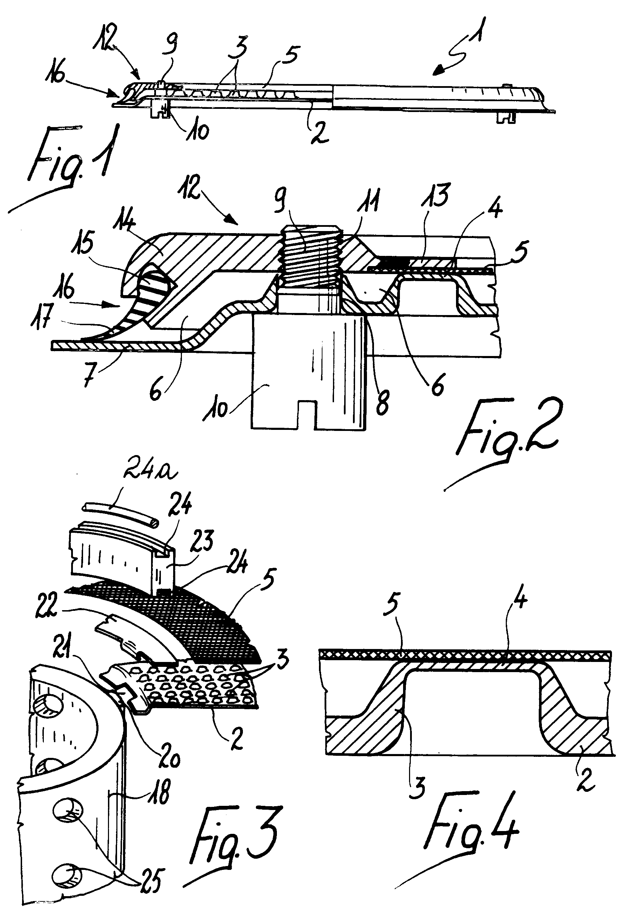

figure 1 is a partially sectional side view of a plate structure according to the invention;
figure 2 is an enlarged sectional view of the outer region of the plate structure of figure 1;
figure 3 is an exploded view of a detail of a liquid filtration device on which the plate structure according to the invention is mounted;
figure 4 is an enlarged sectional detail view of the plate structure of figure 1;
figure 5 is a view of a portion of a liquid filtration device with plates according to the invention, during the filtration step;
figure 6 is a view of the filter of figure 5 during the washing step;
figure 7 is an enlarged detail view of the filter of figure 6 during said washing step.

With reference to the above figures, the plate structure for liquid filtration devices according to the invention is generally indicated by the reference numeral 1 and comprises a metallic disk-like plate 2 which is arranged horizontally and is provided, on all of its surface, with a plurality of protrusions or raised portions 3 defining an upper planar resting surface 4 for one or more disk-like filtration elements 5 of filtration fabric. Preferably, the protrusions have a truncated cone shape.

A liquid collection region 6 is thus defined between the filtration fabric element 5 and the upper surface of the plate 2.

Threaded ends 9 of spacer pins 10 are screwed to said plate 2, proximate to its depressed outer circumferential edge 7, in holes 8 defined in some of the protrusions 3.

Said ends 9 protrude upward from said plate 2 and are screwed in corresponding holes 11 formed in an annular shaped flange 12 composed of a planar inner region 13 resting on and circumferentially locking the outer edge of said element 5, and of a region 14 the cross section whereof has substantially the shape of a downwardly directed C.

The wings of said C internally retain the upper rounded end of an annular containment element 16, preferably made of plastic material, which extends downward with an elastic lip 17 which is curved outward and rests on the depressed edge 7.

Since said flange 12 rests on the outermost protrusions 3, the collection region 6 has an outer lowered edge defined between said flange 12 and the plate 2 and outwardly closed by said lip 17.

The plate structure 1 is conveniently provided with an axial insertion hole for a tubular collector 18 which, as illustrated in figure 3, has longitudinal raised portions 20 fittingly accommodated in complementarily shaped seats 21 of said plate 2, while a ring-shaped planar lamina 22 is arranged between the filtration element 5 and the inner circumferential region of the plate 2.

A column of structures 1 is then assembled to said collector 18 by axially interposing, between the lower surface of each plate 2 and the upper surface of each lamina 22, a tubular spacer element 23 which is upwardly and downwardly provided with hydraulic sealing rings 24a accommodated in appropriate seats 24; the inside of the collector 18 is connected to the outside of each structure 1 by means of holes 25 formed in its lateral surface at the regions 6.

The entire column of plates is then accommodated in a substantially cylindrical container 26.

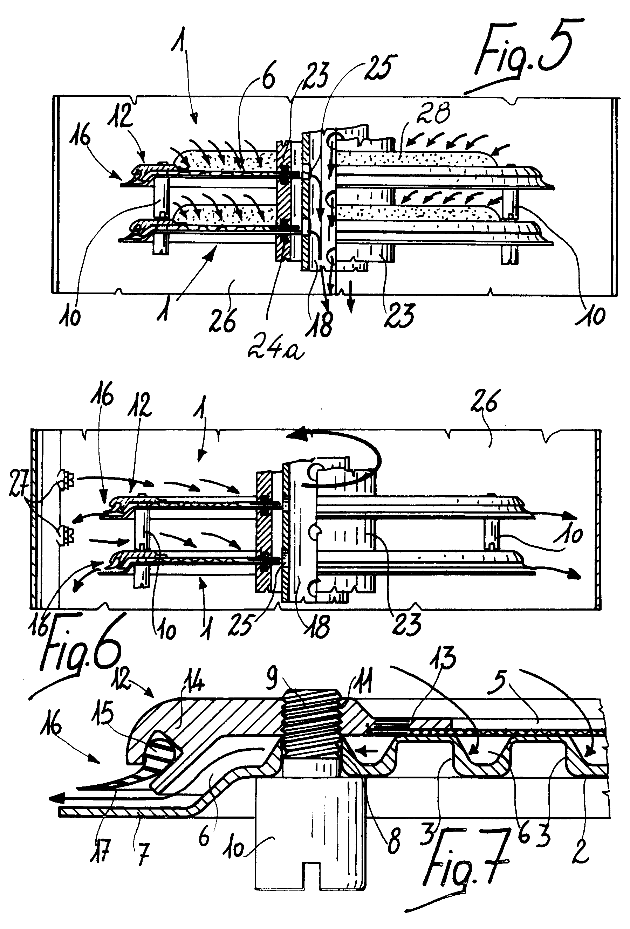

Figures 5, 6 and 7 schematically illustrate the operation of a filtration device provided with plate structures according to the invention, highlighting its advantages with respect to normally used devices.

The filtration occurs by causing a liquid to flow through an absorbent material 28, such as diatomite, placed on the filtration elements 5 of fabric and by then collecting said liquid inside the collector 18.

In this operating condition, as an effect of its elasticity and of the hydraulic pressure existing inside the container 26, the lip 17 rests completely on the edge 7 and prevents the outward leakage of liquid.

When the filter is saturated, i.e. when the regions between the plates have been filled by added diatomite, said diatomite is centrifuged and collected below.

At this point appropriate nozzles 27 arranged on the wall of container 26 spray washing liquid onto the upper surface of each plate while the assembly is simultaneously centrifuged.

The washing liquid is then forced through the filtration fabric elements 5, the collecting regions 6, and finally, by lifting the lips 17, it escapes circumferentially.

It should be noted that said washing action achieves better results than in current filters, since the particular structure of each plate allows a flow and a drainage in every region with no deposits of material.

It should be furthermore noted that the protrusions 3 provided on the plate 2 allow to eliminate the currently provided drainage net.

From what has been described and illustrated, it is therefore evident that the invention has brilliantly achieved the intended aim and objects.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A plate structure for liquid filtration devices, comprising a substantially horizontal disk-like plate (2) having an axial hole and a depressed outer circumferential region (7), an annular upper supporting element (12) supported by said plate and an annular containment element (16) rigidly associated with said upper supporting element (12) and resting with a lower elastic lip (17) on the outer circumferential region (7) of said plate (2), characterized in that said plate (2) has, on its upper surface, a plurality of supporting protrusions (3), said protrusions (3) having an upper planar surface (4) forming a support for filtration elements (5) of fabric, so as to form a liquid collection region (6) below said filtration elements, some of the protrusions (3) arranged adjacent to said circumferential region (7) having holes (8) in which threaded ends (9) of spacer pins (10) are screwed, said threaded ends protruding upward from said plate (2) and screwing to said upper supporting element (12) thereby fixing the circumferential region of said filtration elements (5) between a planar region (13) of said upper supporting element (12) and the upper planar surface (4) of said protrusions (3).

2. A plate structure according to claim 1 characterized in that said upper supporting element (12) defines an annular shaped flange which has an inner planar region (13) resting on said protrusions (3) and fixing the outer edge of said filtration elements (5) and an outer region (14) with a cross section having substantially the shape of a downwardly directed C, said annular containment element (16) being retained between the wings of said C, said liquid collection region (6) continuing between said flange (12) and said disk-like plate (2).

3. A plate structure according to claim 1 and 2, characterized in that the cross section of said annular containment element (16) has an upper expansion retained between said wings of said C-shaped region (14) and a lower lip (17) which is curved outward and normally rests on said depressed circumferential region (7) of said disk-like plate (2).

4. A plate structure according to any of the preceding claims, characterized in that the material of said annular containment element (16) is elastic plastic material.

5. A plate structure according to any of the preceding claims, characterized in that said protrusions (3) have a substantially truncated cone shape.

## Patentansprüche

1. Ein Scheibenelement oder eine Plattenstruktur für Flüssigkeitsfiltereinrichtungen, mit einer im wesentlichen horizontalen scheibenförmigen Platte (2), die eine achsiale Öffnung und einen äußeren, nach unten gezogenen Umfangsbereich (7) aufweist, mit einem ringförmigen oberen Tragelement (12), welches von der erwähnten Platte getragen wird, sowie mit einem ringförmigen Rückhalteelement (16), welches fest mit dem oberen Tragelement (12) verbunden ist und mit einer unteren elastischen Lippe (17) auf dem äußeren Umfangsbereich (7) der Platte (2) aufliegt, dadurch gekennzeichnet, daß die Platte (2) an ihrer oberen Oberflächenseite eine Vielzahl von Trag-Vorsprüngen (3) aufweist, daß die Vorsprünge (3) eine obere planare Fläche (4) besitzen, die eine Auflage für Filterelemente (5) aus Gewebe bilden, um so einen Flüssigkeits-Sammelbereich (6) unter den erwähnten Filterelementen zu bilden, wobei einige der Vorsprünge (3) die dem erwähnten Umfangsbereich (7) benachbart sind, Öffnungen (8) aufweisen, in denen Gewindeenden (9) von Abstandhalter-Stiften (10) durch Einschrauben gehalten sind, wobei die Gewindeenden nach oben von der Platte vorstehen und mit dem oberen Trägerelement (12) verschraubt sind, wodurch der Umfangsbereich der erwähnten Filterelemente (5) zwischen einem ebenen Bereich (13) des oberen Tragelementes (12) und der oberen planaren Oberfläche der Vorsprünge (3) fixiert ist.

2. Scheibenelement nach Anspruch 1, dadurch gekennzeichnet, daß das obere Trägerelement (12) einen ringförmig geformten Flansch bildet, der einen inneren, ebenen Bereich (13), welcher auf den erwähnten Vorsprüngen (3) aufliegt und den äußeren Rand der erwähnten Filterelemente (5) fixiert, sowie einen äußeren Bereich (14) mit einem Querschnittsabschnitt besitzt, der im wesentlichen die Form eines nach unten gerichteten C aufweist, wobei das ringförmige Rückhalteelement (16) zwischen den Schenkeln des C gehalten ist, und wobei sich der Flüssigkeit-Sammelbereich (6) zwischen dem Flansch (12) und der scheibenförmigen Platte (2) fortsetzt.

3. Scheibenelement nach Anspruch 1 oder 2, dadurch gekennzeichnet, daß der Querschnitt des ringförmigen Rückhalteelementes (16) eine obere Vergrößerung, die zwischen den Schenkeln des erwähnten C-förmigen Abschnittes (14) gehalten ist, sowie eine untere Lippe (17) aufweist, die nach außen gekrümmt ist und normalerweise auf dem nach unten gezogenen Umfangsbereich (7) der erwähnten scheibenförmigen Platte (2) aufliegt.

4. Scheibenelement nach einem der vorhergehenden Ansprüche, dadurch gekennzeichnet, daß das Material des ringförmigen Rückhalteelementes (16) ein elastisches Kunststoffmaterial ist.

5. Scheibenelement nach einem der vorhergenenden Ansprüche, dadurch gekennzeichnet, daß die erwähnten Vorsprünge (3) im wesentlichen die Form eines Kegelstumpfes aufweisen.

## Revendications

1. Structure de plaque pour des dispositifs de filtration de liquides, comprenant une plaque (2) en forme de disque sensiblement horizontale présentant un trou central et une zone circonférentielle externe surbaissée (7), un élément de support supérieur annulaire (12) supporté par ladite plaque, et un élément de confinement annulaire (16) rigidement associé audit élément de support supérieur (12) et reposant par une lèvre élastique inférieure (17) sur la zone circonférentielle externe (7) de ladite plaque (2),
caractérisée en ce que ladite plaque (2) présente, sur sa surface supérieure, une pluralité de saillies de support (3), lesdites saillies (3) ayant une surface supérieure plane (4) formant un support pour des éléments de filtration (5) en tissu, de façon à former une zone de collecte de liquide (6) au-dessous desdits éléments de filtration, certaines des saillies (3) agencées de façon adjacente à ladite zone circonférentielle (7) ayant des trous (8) dans lesquels des extrémités filetées (9) de broches d'espacement (10) sont vissées, lesdites extrémités filetées faisant saillie vers le haut de ladite plaque (2) et étant vissées audit élément de support supérieur (12), en fixant ainsi la zone circonférentielle desdits éléments de filtration (5) entre une zone plane (13) dudit élément de support supérieur (12) et la surface plane supérieure (4) desdites saillies (3).

2. Structure de plaque selon la revendication 1,
caractérisée en ce que ledit élément de support supérieur (12) définit un rebord conformé annulaire qui présente une région interne plane (13) reposant sur lesdites saillies (3) et fixant le bord externe desdits élément de filtration (5) et une région externe (14) présentant une section transversale ayant sensiblement la forme d'un C dirigé vers le bas, ledit élément de confinement annulaire (16) étant retenu entre les branches dudit C, ladite zone de collecte de liquide (6) continuant entre ledit rebord (12) et ladite plaque en forme de disque (2).

3. Structure de plaque selon la revendication 1 ou 2,
caractérisée en ce que la section transversale dudit élément de confinement annulaire (16) présente un prolongement supérieur retenu entre lesdites branches de ladite zone (14) en forme de C et une lèvre inférieure (17) qui est incurvée vers l'extérieur et repose normalement sur ladite zone circonférentielle surbaissée (7) de ladite plaque en forme de disque (2).

4. Structure de plaque selon l'une quelconque des revendications précédentes,
caractérisée en ce que la matière dudit élément de confinement annulaire (16) est une matière plastique élastique.

5. Structure de plaque selon l'une quelconque des revendications précédentes,
caractérisée en ce que lesdites saillies (3) présentent une forme de cône sensiblement tronqué.
